# EUROPÄISCHE PATENTSCHRIFT

(11) **EP 0 746 493 B1**
(45) Veröffentlichungstag und Bekanntmachung des Hinweises auf die Patenterteilung: **23.07.1997**
(21) Anmeldenummer: 95910534.7
(22) Anmeldetag: 28.02.1995
(51) Int. Cl.: B62D 25/02

(54) **SELBSTTRAGENDE ROHBAUSTRUKTUR FÜR EIN KRAFTFAHRZEUG SOWIE VERFAHREN ZUM HERSTELLEN DER ROHBAUSTRUKTUR**
SELF-SUPPORTING SHELL STRUCTURE FOR A MOTOR VEHICLE AND A METHOD OF PRODUCING SUCH A SHELL STRUCTURE
COQUE AUTOPORTEUSE BRUTE POUR VEHICULE A MOTEUR ET SON PROCEDE DE FABRICATION

(30) Priorität: 01.03.1994 DE 4406615
(43) Veröffentlichungstag der Anmeldung: 11.12.1996
(73) Patentinhaber: MERCEDES-BENZ AG, 70327 Stuttgart (DE)
(72) Erfinder: SEEFRIED, Johann, D-72184 Eutingen (DE); MACK, Peter, D-71116 Rohrau (DE)
(74) Vertreter: Wittner, Walter
(86) Internationale Anmeldenummer: EP9500728
(87) Internationale Veröffentlichungsnummer: WO9523724

(56) Entgegenhaltungen:
- DE-A- 2 712 084
- DE-B- 1 167 667
- GB-A- 498 671
- GB-A- 925 460

## Beschreibung

Die Erfindung betrifft eine selbsttragende Rohbaustruktur für ein Kraftfahrzeug, insbesondere einen Personenkraftwagen, mit einer Unterbaugruppe, einer zwei Seitenwände aufweisenden Seitenwandgruppe und einer Dachgruppe, sowie ein Verfahren zur Herstellung der Rohbaustruktur.

Es sind Fahrzeugrohbaustrukturen in Blechschalenbauweise bekannt, die sich aus einer Vielzahl von einzelnen Blechpreßteilen zusammensetzen (Mercedes-Benz W 201). Dabei werden die kompletten Seitenwände aus einzelnen Blechteilen der A-, B- und C-Säulen, sowie aus den seitlichen Dachrahmen und Schwellern zusammengesetzt. Diese Vielzahl von Blechpreßteilen muß beim Zusammenbau der Seitenwand in relativ aufwendiger Weise miteinander verbunden werden. Für Verstärkungen in den sowie Knotenverbindungen zu den Abschlußträgern, beispielsweise im Bereich der vorderen und hinteren Dachquerträger, sind relativ aufwendige Führungen erforderlich.

Es ist auch bekannt (DE-PS 692 243), die Seitenwände eines Kraftfahrzeuges aus einem jeweils einteiligen äußeren und inneren Seitenwandteil aufzubauen, die miteinander verbunden sind. Kraftfahrzeuge dieser Art weisen jedoch keine selbsttragende Rohbaustruktur auf.

Aufgabe der Erfindung ist es, eine selbsttragende Rohbaustruktur der eingangs genannten Art sowie ein Verfahren zu ihrer Herstellung zu schaffen, die einen geringen Herstellungsaufwand und dennoch einen präzisen Zusammenbau der verschiedenen Teile der Rohbaustruktur gewährleisten.

Für die selbsttragende Rohbaustruktur wird diese Aufgabe dadurch gelöst, daß jede Seitenwand aus einem einteilig zusammengefügten inneren Seitenwandteil und einem äußeren Seitenwandteil zusammengesetzt ist, und daß die Unterbaugruppe auf ihren beiden, den inneren Seitenwandteilen zugewandten Seiten mit Anbindungsflanschen versehen ist, die korrespondierenden Anbindungsbereichen der inneren Seitenwandteile derart zugeordnet sind, daß die Seitenwandteile für eine toleranzfreie Positionierung relativ zu der Unterbaugruppe in Fahrzeuglängsrichtung ausrichtbar sind. Dadurch ist es möglich, bei der Herstellung der Rohbaustruktur an die bereits fertiggestellte Unterbaugruppe die inneren Seitenwandteile von den Seiten her an die Unterbaugruppe anzusetzen und vor der Verschweißung mit der Unterbaugruppe so in Fahrzeuglängsrichtung relativ zu der Unterbaugruppe auszurichten, daß jeder innere Seitenwandteil exakt an der jeweiligen Unterbaugruppe positioniert ist. Die Ausrichtung der Anbindungflansche ist so gewählt, daß der angesetzte innere Seitenwandteil auf jeder Seite der Unterbaugruppe in Fahrzeuglängsrichtung so weit verschiebbar ist, bis eine exakte, toleranzfreie Positionierung relativ zu der Unterbaugruppe erzielt ist. Durch das anschließende Aufsetzen der äußeren Seitenwandteile auf die bereits exakt positionierten und in dieser Position starr mit dem Unterbau verbundenen inneren Seitenwandteile wird ein sehr präziser Fahrzeugaufbau erzielt, d.h. es wird eine im wesentlichen toleranzfrei hergestellte Rohbaustruktur geschaffen.

In Ausgestaltung der Erfindung sind die Anbindungsflansche derart relativ zu den Anbindungsbereichen der Seitenwände ausgerichtet, daß zusätzlich eine Ausrichtbarkeit der Seitenwände relativ zu der Unterbaugruppe in einer Hochrichtung vorhanden ist. Dadurch ist es möglich, auch Toleranzen in der Hochrichtung zwischen der Unterbaugruppe und den inneren Seitenwandteilen auszugleichen, wodurch die Präzision des Zusammenbaus der Rohbaustruktur weiter verbessert wird.

Für das Verfahren zur Herstellung der Rohbaustruktur wird die erfindungsgemäße Aufgabe dadurch gelöst, daß zunächst auf jeder Seite an die Unterbaugruppe der innere Seitenwandteil als einteiliges Bauteil unter Einbindung von wenigstens einem Dachquerträger der Dachgruppe angefügt wird und anschließend die äußeren Seitenwandteile als jeweils einteilige Bauteile hinzugefügt werden. Durch das erfindungsgemäße Verfahren wird bereits mit dem ersten Verfahrens- oder Fertigungsschritt die komplette tragende Struktur des Fahrzeugaufbaus geschaffen. Das anschließende Ansetzen der äußeren Seitenwandteile stellt im wesentlichen nur noch die Beplankung der bereits vorhandenen Tragstruktur dar. Durch die erfindungsgemäße Aufbaufolge müssen weniger Einzelteile gefügt werden. Ein wesentlicher Vorteil der Erfindung ist, daß aufwendige Fügeprozesse bei Verstärkungen und Knotenanschlußverbindungen entfallen, da alle Knotenverbindungen zu den Anschlußträgern sowie die erforderlichen Verstärkungen mit dem Unterboden durch die gute Zugänglichkeit in einfacher Weise realisierbar sind. Daraus ergeben sich eine reduzierte Fertigungszeit, einfachere und somit leichtere und billigere Verstärkungsteile, eine Reduzierung der Rohbautoleranzen und damit zwangsläufig eine Reduzierung des Herstellungsaufwandes.

In Ausgestaltung der Erfindung werden die äußeren und inneren Seitenwandteile jeweils aus platinengeschweißtem Halbzeug hergestellt. Dabei werden die äußeren und inneren Seitenwandteile jeweils als einteilige Bauteile hergestellt, wodurch aufwendige Verbindungsflansche entfallen können. Dies führt zu einer Reduzierung des Herstellungsaufwands und zu einer Gewichtsreduzierung der Rohbaustruktur.

In weiterer Ausgestaltung der Erfindung werden die äußeren und inneren Seitenwandteile jeweils aus einer Summe von Einzelteilen hergestellt. Auch hier werden die äußeren und inneren Seitenwandteile aus der Summe von Einzelteilen bereits vorab zu einteiligen Bauteilen zusammengefügt, die dann in der erfindungsgemäßen Aufbaufolge an den Unterbau angesetzt werden.

In weiterer Ausgestaltung der Erfindung werden auf jeder Seite zwischen dem äußeren und dem inneren Seitenwandteil je nach Fahrzeugart erforderliche Verstärkungen eingesetzt. Diese Verstärkungen werden entweder in den äußeren oder den inneren Seitenwandteil eingesetzt, wobei die Einsetzstellen einfach zugänglich sind.

In weiterer Ausgestaltung der Erfindung weist die Dachgruppe ein Dach sowie wenigstens zwei Dachquerträger auf, die vor dem Aufsetzen des Daches zwischen die gegenüberliegenden inneren Seitenwandteile eingesetzt werden. Diese innen angeordneten Dachträgerteile werden zweckmäßig bereits zusammen mit der Anfertigung der inneren Seitenwandteile an die Unterbaugruppe zwischen die inneren Seitenwandteile eingesetzt. Dadurch wird in einem Fertigungsschritt der gesamte innere tragende Aufbau der Fahrgastzelle hergestellt, so daß in einem nachfolgenden Schritt in einfacher Weise die jeweils äußeren Teile der Rohbaustruktur angefügt werden können.

Weitere Vorteile und Merkmale der Erfindung ergeben sich aus den Unteransprüchen sowie aus der nachfolgenden Beschreibung von bevorzugten Ausführungsbeispielen der Erfindung, die anhand der Zeichnungen dargestellt sind.
- Fig. 1: zeigt schematisch in einer Explosionsdarstellung den Schritt der Aufbaufolge zum Herstellen einer erfindungsgemäßen Rohbaustruktur für einen Personenkraftwagen gemäß einer Ausführungsform des erfindungsgemäßen Verfahrens, in dem die inneren Seitenwandteile an die Unterbaugruppe angefügt werden,
- Fig. 2: einen Schnitt durch die fertige Rohbaustruktur des Personenkraftwagens nach Fig. 1 auf Höhe der in Fig. 1 dargestellten Schnittlinie II-II,
- Fig. 3: einen Schnitt entlang der Schnittlinie III-III durch die teilweise fertiggestellte Rohbaustruktur nach Fig. 1, bei der der innere Seitenwandteil an die Unterbaugruppe angefügt ist,
- Fig. 3a: eine Schnittdarstellung entsprechend Fig. 3 durch eine weitere Rohbaustruktur ähnlich Fig. 1, bei der ein Anbindungsflansch der Unterbaugruppe für ein Ansetzen eines korrespondierenden Anbindungsbereiches des inneren Seitenwandteiles nach unten gebogen ist,
- Fig. 4: eine weitere Explosionsdarstellung der Rohbaustruktur des Personenkraftwagens nach Fig. 1 in einem nachfolgenden Aufbaufolgeschritt, bei dem die äußeren Seitenwandteile an die bereits mit der Unterbaugruppe verbundenen inneren Seitenwandteile angefügt werden, und
- Fig. 5: einen Schnitt durch die fertiggestellte Rohbaustruktur des Personenkraftwagens nach den Fig. 1 und 4 auf Höhe der Schnittlinie V-V in Fig. 4.

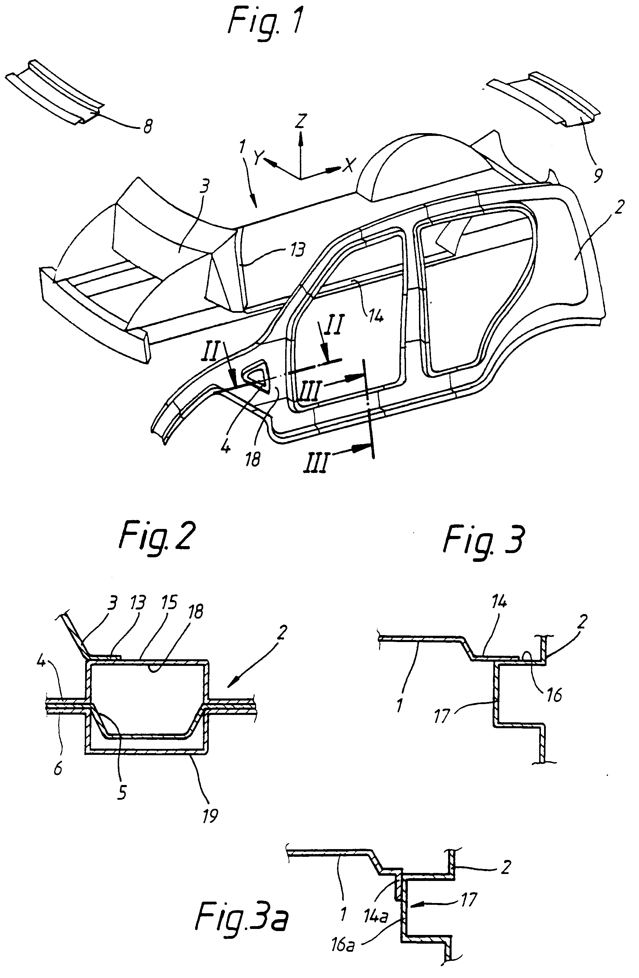

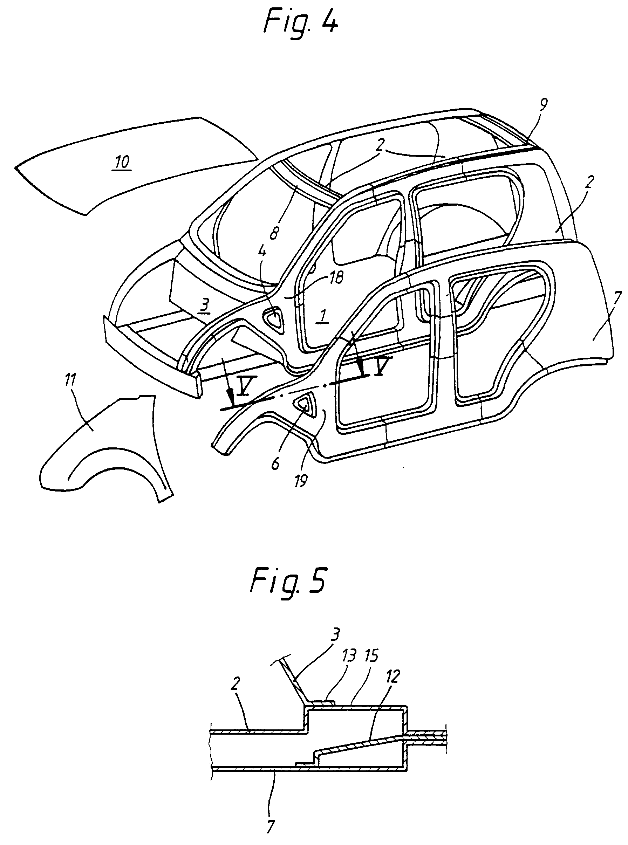

Eine Rohbaustruktur für einen Personenkraftwagen weist nach den Fig. 1 und 4 eine Unterbaugruppe (1) auf. Die Unterbaugruppe (1) der selbsttragenden Rohbaustruktur ist mit einem Vorbau und daran anschließend mit einer Stirnwand (3) versehen. Die Rohbaustruktur weist außerdem eine linke und eine rechte Seitenwand auf, die jeweils aus einem inneren Seitenwandteil (2) und einem äußeren Seitenwandteil (7) besteht. Zwischen die inneren und äußeren Seitenwandteile (2, 7) sind auf jeder Seite fahrzeugtypspezifische Verstärkungen (5, 12) eingelagert (Fig. 2 und 5). Jeder innere und jeder äußere Seitenwandteil (2, 7) kann aus platinengeschweißtem Halbzeug hergestellt sein, wobei das zu verwendende Halbzeug je nach Festigkeitsanordnung eine ein- oder mehrteilige Platine sein kann. Es ist auch möglich, die im wesentlichen bekannten einzelnen Blechteile der Seitenwandteile durch jeweils ein großes Blechteil zusammenzufügen. In Fig. 1 ist lediglich der in Fahrtrichtung linke innere Seitenwandteil dargestellt. Selbstverständlich ist jedoch der rechte innere Seitenwandteil (2) entsprechend symmetrisch aufgebaut und wird auch in gleicher Weise an die Unterbaugruppe (1) eingefügt. Gleiches gilt für den in Fig. 4 dargestellten linken äußeren Seitenwandteil (7). Die Dachgruppe der Rohbaustruktur besteht aus einem vorderen Dachquerträger (8) und einem hinteren Dachquerträger (9) sowie aus einem Dach (10).

Zur Herstellung der Rohbaustruktur werden nach der Fertigstellung der Unterbaugruppe (1) an diese auf beiden Seiten die inneren Seitenwandteile (2) angefügt. Während dieses Aufbaufolgeschrittes werden außerdem auf Höhe der Dachrahmen der inneren Seitenwandteile (2) der vordere und der hintere Dachquerträger (8, 9) zwischen die gegenüberliegenden inneren Seitenwandteile (2) eingesetzt. Dadurch wird bereits mit dem ersten Aufbaufolgeschritt der gesamte tragende Aufbau der Rohbaustruktur erzielt. Mit dem anschließenden zweiten Aufbaufolgeschritt wird dann die Beplankung in Form der äußeren Seitenwandteile (7) und des Daches (10) dieses tragenden Aufbaus vorgenommen.

Wie aus Fig. 3 ersichtlich ist, wird jeder innere Seitenwandteil (2) so an die Unterbaugruppe (1) angefügt, daß sich ein Schweller (17) in Form eines U-förmig nach innen eingebuchteten Profils des inneren Seitenwandteiles (2) am Unterboden der Unterbaugruppe (1) befindet. Zur Anbindung des inneren Seitenwandteiles (2) an die Unterbaugruppe (1) ist die Unterbaugruppe (1) auf ihren beiden gegenüberliegenden Seiten mit Anbindungsflanschen (13, 14) versehen (Fig. 1, 2 und 3), die derart relativ zu den korrespondierenden Anbindungsbereichen (15, 16a) des inneren Seitenwandteiles (2) ausgerichtet sind, daß sie eine gewisse Verschiebung in Fahrzeuglängsrichtung, d.h. auf das Koordinatensystem nach Fig. 1 bezogen in X-Richtung, ermöglichen. Dabei ist der Anbindungsflansch (13) in einer vertikalen Fahrzeuglängsebene in Fahrzeuglängsrichtung nach hinten von der Stirnwand abgestellt. Der Anbindungsflansch (14) ragt von dem Unterboden aus in einer horizontalen Ebene seitlich nach außen ab. Die Oberseite des Schwellers (17) bildet den korrespondierenden Anbindungsbereich (16) des inneren Seitenwandteiles (2), der im angesetzten Zustand des inneren Seitenwandteiles (2) ebenfalls horizontal verläuft und flächig von unten an dem Anbindungsflansch (14) anliegt. Dieser Anbindungsflansch (13) wird an einen A-Säulenabschnitt (18) des inneren Seitenwandteiles (2) angesetzt, der entsprechend in einer vertikalen Fahrzeuglängsebene ausgerichtet ist. Durch den A-Säulenabschnitt (18) wird die innere Profilschale der späteren A-Säule geschaffen. Die äußere Profilschale wird durch einen korrespondierenden A-Säulenabschnitt (19) des äußeren Seitenwandteiles (7) ergänzt. Um für den inneren A-Säulenabschnitt (18) im Anschlußbereich vorderer, nicht dargestellter Längsträger ein U-förmiges Profil zu erzielen, ist an diesen Abschnitt (18) nach vorne anschließend eine Ausprägung (4) vorgesehen, die zum äußeren Seitenwandteil (7) hin ausgebuchtet ist. Der äußere Seitenwandteil (7) weist eine korrespondierende Einprägung (6) auf, durch die das im A-Säulenabschnitt (18) entsprechende U-Profil für den äußeren A-Säulenabschnitt (19) gebildet wird. Wie aus Fig. 2 erkennbar ist, ergibt sich dadurch der kastenförmige Querschnitt der A-Säule. Zur Verstärkung der A-Säulen und der vorderen Längsträger sind Verstärkungsbleche (5, 12) zwischen die beiden Seitenwandteile (2, 7) im Bereich der A-Säulenabschnitte (18, 19) eingebunden, wobei sich die Verstärkung (12) bis in den vorderen Längsträger fortsetzt, wie aus Fig. 5 erkennbar ist. Durch die flächige Anordnung des inneren Seitenwandteiles (2) mit seinen Anbindungsbereichen (15, 16) an die Anbindungsflansche (13, 14) der Unterbaugruppe (1) ist es möglich, den Seitenwandteil (2) in Fahrzeuglängsrichtung vor der Verschweißung mit der Unterbaugruppe (1) so auszurichten, daß der Seitenwandteil (2) exakt relativ zu den korrespondierenden Teilen der Unterbaugruppe (1) ausgerichtet ist und toleranzfrei positioniert ist.

Die Schnittdarstellung gemäß der Fig. 3a entspricht im wesentlichen der der Fig. 3. Bei dieser Unterbaugruppe (1) ist jedoch der Anbindungsflansch (14a) nach unten umgekantet, wodurch der vertikal ausgerichtete Boden des Schwellers (17) den relevanten Anbindungsbereich (16a) des inneren Seitenwandteiles (2) ergibt. Dadurch ist es möglich, den inneren Seitenwandteil (2) zusätzlich zu der Verschiebbarkeit in Fahrzeuglängsrichtung (X-Richtung) noch in der Hochrichtung (Z-Richtung) exakt zu Positionieren, so daß sich zusätzliche Toleranzausgleichsmöglichkeiten vor dem Verschweißen von Unterbaugruppe (1) und inneren Seitenwandteilen (2) ergeben. Für die Anbindung des inneren Seitenwandteiles (2) an die Unterbaugruppe (1) ist daher der innere Seitenwandteil (2) zunächst quer zur Fahrzeuglängsrichtung, d.h. in Y-Richtung, an die Unterbaugruppe (1) ansetzbar und kann nun entweder ausschließlich in X-Richtung (Fig. 3) oder sowohl in X-Richtung als auch in Z-Richtung exakt ausgerichtet werden, bevor er mit der Unterbaugruppe (1) verschweißt wird.

In einem nächsten Arbeitsschritt des Aufbaufolgekonzeptes werden nunmehr die äußeren Seitenwandteile (7) an die inneren Seitenwandteile (2) angefügt, nachdem die entsprechenden Verstärkungen (5, 12) zwischen die beiden Seitenwandteile entsprechend den Fig. 2 und 5 positioniert eingesetzt worden sind. Die Dachgruppe wird durch das Aufsetzen des Daches (10) auf die Dachquerträger (8 und 9) und die seitlichen Dachrahmen der Seitenwände vervollständigt. In einem weiteren Aufbaufolgeschritt werden dann zusätzliche Beplankungsteile an die Rohbaustruktur, und zwar insbesondere im Vorbaubereich Kotflügelbeplankungsteile (11), an die Seitenwände (2, 7) angesetzt.

Anstelle der Einlagerung von Verstärkungen ist es auch möglich, besonders beanspruchte Zonen in den Hauptpreßteilen der Seitenwände auszusparen und die entsprechenden Verstärkungen nachträglich einzupunkten.

## Patentansprüche

1. Selbsttragende Rohbaustruktur für ein Kraftfahrzeug, insbesondere einen Personenkraftwagen, mit einer Unterbaugruppe, einer zwei Seitenwände aufweisenden Seitenwandgruppe und einer Dachgruppe,
**dadurch gekennzeichnet,**
daß jede Seitenwand aus einem einteilig zusammengefügten inneren Seitenwandteil (2) und einem äußeren Seitenwandteil (7) zusammengesetzt ist, und daß die Unterbaugruppe (1) auf ihren beiden, den inneren Seitenwandteilen (2) zugewandten Seiten mit Anbindungsflanschen (13, 14, 14a) versehen ist, die korrespondierenden Anbindungsbereichen (15, 16, 16a) der inneren Seitenwandteile (2) derart zugeordnet sind, daß die Seitenwandteile (2) für eine toleranzfreie Positionierung relativ zu der Unterbaugruppe (1) in Fahrzeuglängsrichtung (X) ausrichtbar sind.

2. Rohbaustruktur nach Anspruch 1,
**dadurch gekennzeichnet,**
daß die Anbindungsflansche (14a) derart relativ zu den Anbindungsbereichen (16a) der Seitenwände (2) ausgerichtet sind, daß zusätzlich eine Ausrichtbarkeit der Seitenwände (2) relativ zu der Unterbaugruppe (1) in einer Hochrichtung (Z) vorhanden ist.

3. Verfahren zum Herstellen einer Rohbaustruktur nach Anspruch 1,
**dadurch gekennzeichnet,**
daß zunächst auf jeder Seite an die Unterbaugruppe (1) der innere Seitenwandteil (2) als einteiliges Bauteil unter Einbindung von wenigstens einem Dachquerträger (8, 9) der Dachgruppe angefügt wird und anschließend die äußeren Seitenwandteile (7) als jeweils einteilige Bauteile hinzugefügt werden.

4. Verfahren nach Anspruch 3,
**dadurch gekennzeichnet,**
daß die äußeren und inneren Seitenwandteile (7, 2) jeweils aus platinengeschweißtem Halbzeug hergestellt werden.

5. Verfahren nach Anspruch 3,
**dadurch gekennzeichnet,**
daß die äußeren und inneren Seitenwandteile (7, 2) jeweils aus einer Summe von Einzelteilen hergestellt werden.

6. Verfahren nach einem der Ansprüche 3 bis 5,
**dadurch gekennzeichnet,**
daß auf jeder Seite zwischen dem äußeren und dem inneren Seitenwandteil (7, 2) je nach Fahrzeugart erforderliche Verstärkungen (5, 12) eingesetzt werden.

7. Verfahren nach Anspruch 6,
**dadurch gekennzeichnet,**
daß die Verstärkungen (5, 12) vor dem Anfügen der äußeren Seitenwandteile (7) mit den inneren Seitenwandteilen (2) verbunden werden.

8. Verfahren nach einem der vorhergehenden Ansprüche,
**dadurch gekennzeichnet,**
daß die Dachgruppe ein Dach (10), sowie wenigstens zwei Dachquerträger (8, 9) aufweist, die vor dem Aufsetzen des Daches (10) zwischen die gegenüberliegenden inneren Seitenwandteile (2) eingesetzt werden.

## Claims

1. Integral bodyshell structure for a motor vehicle, in particular a passenger car, with an underframe assembly, a side-wall assembly which has two side walls, and a roof assembly, characterized in that each side wall is composed of an inner side-wall part (2) and an outer side-wall part (7) which are integrally joined together, and in that, on its two sides facing the inner side-wall parts (2), the underframe assembly (1) is provided with fastening flanges (13, 14, 14a) which are assigned to corresponding fastening regions (15, 16, 16a) of the inner side-wall parts (2) in such a manner that the side-wall parts (2) can be aligned in the longitudinal direction (X) of the vehicle relative to the underframe assembly (1) for tolerance-free positioning.

2. Bodyshell structure according to Claim 1, characterized in that the fastening flanges (14a) are aligned relative to the fastening regions (16a) of the side walls (2) in such a manner that it is possible additionally for the side walls (2) to be aligned in a vertical direction (Z) relative to the underframe assembly (1).

3. Method of producing a bodyshell structure according to Claim 1, characterized in that first the inner side-wall part (2) is joined on each side to the under-frame assembly (1) as an integral component, and, as it is joined, fastening in at least one roof transverse support (8, 9) of the roof assembly, and then the outer side-wall parts (7) are added in each case as integral components.

4. Method according to Claim 3, characterized in that the outer and inner side-wall parts (7, 2) are each produced from a plate-welded semi-finished product.

5. Method according to Claim 3, characterized in that the outer and inner side-wall parts (7, 2) are each produced from a sum total of component parts.

6. Method according to one of Claims 3 to 5, characterized in that reinforcements (5, 12) which are required depending on the type of vehicle are inserted on each side, between the outer and the inner side-wall part (7, 2).

7. Method according to Claim 6, characterized in that the reinforcements (5, 12) are connected to the inner side-wall parts (2) before the outer side-wall parts (7) are joined on.

8. Method according to one of the preceding claims, characterized in that the roof assembly has a roof (10) and at least two roof transverse supports (8, 9) which are inserted between the opposite, inner side-wall parts (2) before the roof (10) is put on.

## Revendications

1. Structure primaire autoporteuse pour un véhicule automobile, en particulier un véhicule de tourisme, comportant un groupe formant infrastructure, un groupe formant parois latérales, présentant deux parois latérales ; et un groupe formant pavillon,
**caractérisée**
par le fait que chaque paroi latérale est composée d'une portion (2) formant paroi latérale intérieure, regroupée en une seule pièce et d'une portion (7) formant paroi latérale extérieure, et que le groupe (1) formant infrastructure est muni, sur ses deux côtés orientés vers les portions (2) formant parois latérales extérieures, de rebords de fixation (13, 14, 14a) qui sont associés aux zones de fixation correspondantes (15, 16, 16a) des portions (2) formant paroi latérale intérieure de façon telle que les portions (2) formant paroi latérale puissent s'orienter selon la direction longitudinale (X) du véhicule, par rapport au groupe (1) formant infrastructure, pour un positionnement sans tolérance.

2. Structure primaire selon la revendication 1,
**caractérisée**
par le fait que les rebords de fixation (14a) sont orientés par rapport aux zones de fixation (16a) des parois latérales (2) de façon telle qu'il existe en outre une possibilité d'orientation des parois latérales (2), par rapport au groupe (1) formant infrastructure, selon une direction verticale (Z).

3. Procédé de fabrication d'une structure primaire selon la revendication 1,
**caractérisé**
par le fait que tout d'abord, de chaque côté, la portion (2) formant paroi latérale intérieure est assemblée au groupe (1) formant infrastructure, sous forme d'un composant monobloc, avec liaison d'au moins une traverse de pavillon (8, 9) du groupe formant pavillon et qu'ensuite les portions (7) formant paroi latérale extérieure est assemblée chacune sous forme d'un composant monobloc.

4. Procédé selon la revendication 3,
**caractérisé**
par le fait que l'on fabrique chacune des portions (7, 2), formant paroi latérale extérieure et intérieure, à partir d'un demi produit obtenu par soudure de flans.

5. Procédé selon la revendication 3,
**caractérisée**
par le fait que l'on fabrique chacune des portions (7, 2), formant paroi latérale extérieure et intérieure, à partir d'une somme de pièces individuelles.

6. Procédé selon l'une des revendications 3 a 5,
**caractérisée**
par le fait que, de chaque côté, on insère, entre la portion (7) formant paroi latérale extérieure et la portion (2) formant paroi latérale intérieure, des renforts (5, 12) nécessaires selon chaque type de véhicule.

7. Procédé selon la revendication 6,
**caractérisé**
par le fait que l'on fixe les renforts aux portions (2) formant paroi latérale intérieure avant assemblage des portions (7) formant paroi latérale extérieure.

8. Procédé selon l'une des revendications précédentes,
**caractérisé**
par le fait que le groupe formant pavillon présente un pavillon (10) ainsi qu'au moins deux traverses de pavillon (8, 9) que l'on insère entre les portions opposées (2) formant paroi latérale intérieure avant pose du pavillon (10).
